(19) Europäisches Patentamt
European Patent Office
Office européen des brevets

(11) Veröffentlichungsnummer: **0 051 106**
**B1**

(12) # EUROPÄISCHE PATENTSCHRIFT

(45) Veröffentlichungstag der Patentschrift: **27.03.85**

(21) Anmeldenummer: **81104883.4**

(22) Anmeldetag: **24.06.81**

(51) Int. Cl.⁴: **C 08 G 18/38**, C 08 G 18/50, C 08 G 18/66, C 08 L 75/06, C 09 D 5/18

(54) **Gegebenenfalls geschäumte Intumeszenzmassen und ihre Verwendung.**

(30) Priorität: **05.11.80 DE 3041731**

(43) Veröffentlichungstag der Anmeldung: **12.05.82 Patentblatt 82/19**

(45) Bekanntmachung des Hinweises auf die Patenterteilung: **27.03.85 Patentblatt 85/13**

(84) Benannte Vertragsstaaten: **AT BE CH DE FR GB IT LI NL SE**

(56) Entgegenhaltungen:
**EP - A - 0 004 618**
**FR - A - 1 325 195**
**US - A - 3 235 517**
**US - A - 3 396 129**

(73) Patentinhaber: **BAYER AG, Konzernverwaltung RP Patentabteilung, D-5090 Leverkusen 1 Bayerwerk (DE)**

(72) Erfinder: **von Bonin, Wulf, Dr., Mendelssohnstrasse 30, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 051 106 B1

BUNDESDRUCKEREI BERLIN

**Beschreibung**

Die Erfindung betrifft gegebenenfalls geschäumte Intumeszenzmassen auf Basis von Polyurethanen, die als Rezepturbestandteil eine Kombination aus Polyesterpolyolen, Cyanursäurederivaten und phosphorhaltigen Polyhydroxylverbindungen enthalten und plastisch-elastischen Charakter haben.

Als Intumeszenzmassen werden solche Materialien verstanden, die bei Einwirkung von Feuer und Hitze aufschäumen und dabei einen isolierenden und feuerabweisenden Schaum ausbilden, der die rückwärtigen Bezirke von der Feuereinwirkung schützt. Solche Intumeszenzmassen sind in Form von Lacken, Beschichtungen, Mörteln und Kitten bekannt.

Gute Intumeszenzmassen sollten bei Flammenzutritt ihr Volumen mindestens verdoppeln können und außerdem beständig sein gegen Wasserangriff. Insbesonders ist es von technischem Interesse, wenn diese Eigenschaften kombiniert werden können mit Halogenfreiheit und geringem Raumgewicht, d. h. gewisser Isolierwirkung im unbeanspruchten Zustand, sowie Plastizität bzw. Flexibilität und/oder Elastizität.

Elastisch/plastische Intumeszenzmassen mit guter Formbeständigkeit könnten als Halbzeuge wie Bänder, Platten, Profile, Beschichtungen, Granulate oder Verfüllungen eine Vielzahl von Anwendungen im Bereich des vorbeugenden Brandschutzes finden.

Die Mitverwendung von Melamin bei der Herstellung von Weichschaumstoffen unter Verwendung von im wesentlichen linearen Polyolen vorzugsweise Polyetherpolyolen, ist prinzipiell bekannt (DE-A-2 815 554). Solche Schaumstoffe haben zwar den Charakter der Schwerentflammbarkeit und brennen bei Beflammung nicht mehr vollständig ab. Auf keinen Fall haben sie jedoch den Charakter von Intumeszenzmassen; eine Volumenvergrößerung bei Beflammung unter Ausbildung eines feuerabweisenden Schaumes wird nicht beobachtet.

Gemäß einem älteren Vorschlag lassen sich flammwidrige Dichtungsmassen, die frei von Phosphor und Halogen sind, unter Verwendung von verzweigten Hydroxylgruppen aufweisenden Polyestern herstellen. Solche Dichtungsmassen haben ebenfalls keinen Intumeszenzcharakter, d. h. sie schäumen bei Beflammung nicht auf.

In einem weiteren älteren Vorschlag werden gegebenenfalls geschäumte Intumeszenzmassen beschrieben, die erhalten werden durch Umsetzung von

1. Polyisocyanaten mit
2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
3. aromatischen Hydroxycarbonsäuren oder deren Salzen und
4. gegebenfalls Wasser und/oder weiteren organischen Verbindungen mit gegenüber Isocyanaten reaktionsfähigen Wasserstoffatomen.

Gemäß diesem Vorschlag können auch Hydroxylgruppen aufweisende Polyester sowie Melamin mitverwendet werden: dabei handelt es sich jedoch nicht um die erfindungsgemäß zu verwendenden hochverzweigten, d. h. polyfunktionellen Polyestertypen, sondern um die Mitverwendung von linearen Polyestern. Hierbei werden jeweils harte Produkte erhalten.

Die US-A-3 396 129 beschreibt Alkydharz-gebundene Lacke, die als Brandschutz vermittelndes Pigment Umsetzungsprodukte aus Isocyanaten, speziellen Hydroxyalkylphosphaten bzw. -phosphonaten, Melamin und niedermolekularen Polyalkoholen in gemahlener Form enthalten können.

Gemäß dieser US-A enthalten Intumeszenzkompositionen gemäß Stand der Technik einen Kohlenstoffbildner (Carbonific) aus der Klasse der Polyalkohole, eine Phosphorkomponente und ggf. eine aufschäumende Komponente. Da alle diese Komponenten bisher zu wasserlöslich sind, sollen diese gemäß US-A z. B. in Gestalt eines besonders wasserunlöslich gemachten Melaminphosphats verbessert werden. Die Wasserunlöslichkeit der Polyalkohole soll verbessert werden, indem man sie in mahlfähige spröde Urethane oder Polyglykolcarbonate überführt.

Die Überführung in mahlbare, spröde Urethane durch Reaktion mit Isocyanaten kann gemäß US-A auch in Gegenwart und Mitreaktion von einbaufähigen Phosphaten und in Gegenwart von Melamin vorgenommen werden. Auch so erhält man — in allerdings schwierig zu beherrschender Reaktion — spröde, mahlbare, wasserresistente Produkte. Der US-A ist zu entnehmen (Spalte 3/31 — Spalte 3/43), daß nicht ohne weiteres eine Komponente durch eine andere ersetzt werden kann, wenn man brauchbare Produkte erhalten will, daß man vielmehr eine sehr genaue Komposition einhalten muß.

Das erfindungsgemäß einzusetzende spezielle Hydroxylgruppen aufweisende phosphorhaltige Kondensationsprodukt (Komponente 2) wird in der US-A nicht genannt.

Es wurde nun überraschenderweise festgestellt, daß es möglich ist, anstelle von spröden Pigmentharzen zu für die Herstellung von Profilen, Bandagen und sonstigen Formkörpern mit breitem Eigenschafts- und Raumgewichtsbereich geeigneten Polymerwerkstoffen zu gelangen, wenn man nicht Polyalkohole, sondern Polyester mit spezieller, genau definierter Zusammensetzung als Reaktions-

komponente (Komponente 3) verwendet und auf den Polyalkohol oder sein Urethan ganz verzichtet.

Tatsächlich wirkt in den erfindungsgemäßen Intumeszenzmassen des Polyester-urethan als »Carbonific«.

Daß dies möglich ist, ist als besonders überraschend anzusehen, denn in ihm ist zwischen den aus der US-A als Carbonific bekannten Polyalkoholen und die durch gemäß Lehre der US-A eingeführte Urethangruppe noch die ganze Polymerkette des Polyestermoleküls eingeschoben, welches grundsätzlich brennbare Substanz darstellt, so daß zu erwarten war, daß die Brandschutzeigenschaften solcher Polyesterurethane stark herabgesetzt sind. Es war nicht bekannt, daß solche Polyester als »Carbonific« im Sinne von Kohlenstoffschaumbildner dienen.

Gegenstand der Erfindung sind gegebenenfalls geschäumte Intumeszenzmassen, erhalten durch Umsetzung von

1. Polyisocyanaten mit
2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
3. Hydroxylgruppen aufweisenden Polyestern der OH-Zahl 140 bis 300, erhalten durch Umsetzung von zwei bis zehn C-Atome aufweisenden Polycarbonsäuren mit mindestens zwei Polyolen aus zwei verschiedenen der drei folgenden Gruppen
   a) mehr als drei OH-Gruppen aufweisende Hydroxylverbindungen vom Molekulargewicht bis 200,
   b) drei OH-Gruppen aufweisende Hydroxylverbindungen vom Molekulargewicht bis 150,
   c) zwei OH-Gruppen aufweisende Hydroxylverbindungen vom Molekulargewicht bis 80,

   wobei ein Polyol der Gruppe a) angehören soll, und
4. Cyanursäure und/oder Cyanursäurederivaten und
5. gegebenenfalls Wasser und/oder weiteren organischen Verbindungen mit gegenüber Isocyanaten reaktionsfähigen Wasserstoffatomen.

Erfindungsgemäß sind solche Intumeszenzmassen bevorzugt, die durch Umsetzung von 10 bis 35 Gew.-Teilen eine Polyisocyanats mit 100 Gew.-Teilen eines Gemisches, bestehend aus 5 bis 50 Gew.-% an mindestens zwei Hydroxylgruppen aufweisenden phosphorhaltigen Kondensationsprodukten und 30 bis 70 Gew.-% an Polyestern und 7 bis 40 Gew.-% am Cyanursäure(derivaten) und 0–10 Gew.-% Wasser und/oder 0 bis 25 Gew.-% an weiteren organischen Verbindungen mit gegenüber Isocyanaten reaktionsfähigen Wasserstoffatomen erhalten worden sind.

Besonders bevorzugt sind Intumeszenzmassen, dadurch gekennzeichnet, daß als Polyisocyanate solche verwendet werden, wie sie durch Anilin-Formaldehyd-Kondensation und anschließende Phosgenierung erhalten werden, und auch solche die als mindestens zwei Hydroxylgruppen aufweisende Kondensationsprodukte solche der Formel

$$(RO)_2PO-CH_2-N=(CHX-CHX-OH)_2$$

enthalten, worin in der Formel

R = $C_1-C_8$-Alkyl oder $C_1-C_8$-Hydroxyalkyl und
X = H oder Methyl bedeuten.

Die Erfindung betrifft auch die Verwendung der neuen Intumeszenzmassen als Hohlraumfüllungen, Fugenabdichtungen und Beschichtungen mit Intumeszenzeigenschaften, usw. wenn sie durch Reaktion in Formen oder durch nachträgliche Verformung der ausreagierten Reaktionsgemische erhalten worden sind, zur Herstellung von Formkörpern mit Intumeszenzeigenschaften.

Im Falle der vorliegenden Erfindung werden nun ausgesprochen weiche, gegebenenfalls geschäumte Intumeszenzmassen erhalten. Bei den geschäumten Typen wurde überraschenderweise noch gefunden, daß sie den Charakter von gegen Wasser beständigen, plastisch-elastischen geschäumten Massen haben, d. h. sie lassen sich leicht zusammendrücken und erholen sich nur langsam unter Ausbildung der ursprünglichen Form. Dieses unerwartete Verhalten ist als technisch besonders vorteilhaft zu bewerten, z. B. wenn es gilt, solche Intumeszenzmassen in Form vorgefertigter Bänder oder sonstiger Formkörper leicht in Fugen oder Hohlräume einzubringen, wo sie sich dann wieder ausdehnen und den zu verschließenden Spalt mit all seinen gegebenen Form-Unregelmäßigkeiten ausfüllen.

Plastische, elastische oder plastisch-elastische Intumeszenzmassen, wie sie erfindungsgemäß erhalten werden, besitzen ein besonders technisches Interesse, weil sich daraus hergestellte Vorformlinge besonders einfach in Fugen oder Hohlräume eindrücken lassen, weil sie auch zur Umwicklung von Kabeln und Rohren verwendet werden können und ihre Anwendbarkeit durch Erschütterungen

des Applikationsfeldes nicht beeinträchtigt wird. Ihre erhebliche Resistenz gegen Wasserzutritt ist weiterhin ein interessanter technischer Vorteil.

Die erfindungsgemäß zugänglichen, weichen, flexiblen Intumeszenzmassen sind naturgemäß schwer entflammbar, ohne Mitverwendung von Halogenverbindungen. Sie schäumen bei Beflammung bis zum Zehnfachen ihres ursprünglichen Volumens auf und bilden dabei einen feuerabweisenden Schaum, der die rückwärtigen Bereiche vor weiteren Flammenzutritt abschirmt.

Sie können auch in der Nähe (d. h. unterhalb) ihrer Aufschäumtemperatur thermoplastisch verarbeitet werden. Bei geeigneter Temperaturführung im Laufe der thermoplastischen Verarbeitung (z. B. durch Pressen, Extrudieren) zu Formkörpern können diese geschäumten oder massiven Charakter haben. Das thermoplastische Verhalten unter gewissen Bearbeitungsbedingungen kann auch zur Modifizierung von Formteilen, z. B. Platten aus gschäumten Material herangezogen werden, etwa zum Trennen oder Verschweißen mit anderen Materialien oder auch zum Prügen bzw. bleibendem Verformen.

Bei der Herstellung der neuen Intumeszenzmaterialien kann kontinuierlich oder diskontinuierlich gearbeitet werden.

Die Herstellung kann durch Vermischen der Komponenten bzw. bereits vorgemischter Komponentengemische vor Ort geschehen und die Reaktionsmischung maschinell oder per Hand in z. B. zu verschließende Öffnungen bzw. beheizte oder unbeheizte Formen drucklos oder unter Druck eingegossen werden, wo sie dann aufschäumt bzw. aushärtet. Sie kann bei entsprechender technischer Ausrüstung auf die zu schützenden Substrate und Untergründe aufgesprüht, aufgestrichen oder aufgegossen werden. Es ist auch in Betracht zu ziehen, daß man mit den erfindungsgemäßen Reaktionsgemischen zunächst Halbzeuge, z. B. Schaumstoffe, Profile oder Beschichtungen herstellt und diese dann in technisch erforderliche Weise weiterverarbeitet, z. B. durch Schneiden, durch Warmverformen, Granulieren, Mahlen oder Mischen, Beschichtungen und Verkleben.

Durch Kombination der Reaktionsgemische mit geschäumten oder massiven anorganischen oder organischen Zuschlagstoffen, wie z. B. Polystyrolschaum, Polyurethanschaum, Phenoplasten, Aminoplasten oder Kies oder Blähton, Harnstoff- oder Phenolharzschäumen, Schaumglas, Glasfasern, Holz, Mineralwolle oder Bims, können auch Verbunde mit speziellen Intumeszenzeigenschaften erhalten werden. Die Anwendung der erfindungsgemäßen Intumeszenzmassen zur Herstellung von mit Fasern oder Drähten bzw. Geweben, Strängen oder Vliesen aus organischen oder anorganischen Materialien verstärkten Formteilen oder ihre Verwendung als Bestandteil in Mehrschicht- bzw. Sandwichaufbauten sind ebenfalls in Betracht zu ziehen; ebenso die Kombination mit anderen Intumeszenzmaterialien auf organischer oder anorganischer Basis.

Als Füllstoffe kommen allein oder in Kombinationen insbesondere Aluminiumoxydhydrate, Kreide, Kaolin, Glas und massive oder hohle Perlen aus silikatischem Material in Betracht, z. B. sogenannte Mikroballons, Aluminiumoxydhydrate sind wegen ihrer Dehydratisierungsfähigkeit neben Hohlperlen bevorzugt.

Ausgangskomponenten für die Herstellung der erfindungsgemäßen Intumeszenzmassen sind:

1. Aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

n = 2–4, vorzugsweise 2,

und

Q einen aliphatischen Kohlenwasserstoffrest mit 2–18, vorzugsweise 6–10 C-Atomen,
einen cycloaliphatischen Kohlenwasserstoffrest mit 4–15, vorzugsweise 5–10 C-Atomen,
einen aromatischen Kohlenwasserstoffrest mit 6–15, vorzugsweise 6–13 C-Atomen,
oder einen araliphatischen Kohlenwasserstoffrest mit 8–15, vorzugsweise 8–13 C-Atomen,

bedeuten, z. B. Äthylen-diisocyanat, 1,4-Tetramethylendiisocyanat, 1,6-Hexamethylendiisocyanat, 1,12-dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-A-874 430 und 848 671 beschrieben werden, m- und p-Isocyanatophenylsulfonyl-isocyanate gemäß der US-A-3 454 606, perchlorierte Arylpolyisocyanate, wie sie z. B. in der DE-B-1 157 601 (US-A-3 277 138) beschrieben werden,

Carbodiimidgruppen aufweisende Polyisocyanate, wie sie in der DE-C-1 092 007 (US-A-3 152 162) sowie in den DE-A-2 504 400, 2 537 685 und 2 552 350 beschrieben werden, Norbornan-Diisocyanate gemäß US-A-3 492 330, Allophanatgruppen aufweisende Polyisocyanate, wie sie z. B. in der GB-A-994 890, der BE-A 761 626 und der NL-A-7 102 524 beschrieben werden, Isocyanuratgruppen aufweisende Polyisocyanate, wie sie z. B. in der US-A-3 001 973, in den DE-C-Patentschriften 1 022 789, 1 222 067 und 1 027 394 sowie in den DE-A-1 929 034 und 2 004 048 beschrieben werden, Urethangruppen aufweisende Polyisocyanate, wie sie z. B. in der BE-A-752 261 oder in den US-A-3 394 164 und 3 644 457 beschrieben werden, acylierte Harnstoffgruppen aufweisende Polyisocyanate gemäß der DE-C-1 230 778, Biuretgruppen aufweisende Polyisocyanate, wie sie z. B. in den US-A-3 124 605, 3 201 372 und 3 124 605 sowie in der GB-A-889 050 beschrieben werden, durch Telomerisationsreaktionen hergestellte Polyisocyanate, wie sie z. B. in der US-A-3 654 106 beschrieben werden, Estergruppen aufweisende Polyisocyanate, wie sie z. B. in den GB-A-965 474 und 1 072 956, in der US-A-3 567 763 und in der DE-C-1 231 688 genannt werden, Umsetzungsprodukte der obengenannten Isocyanate mit Acetalen gemäß der DE-C-1 072 385 und polymere Fettsäureester enthaltende Polyisocyanate gemäß der US-A-3 455 883.

Es ist auch möglilch, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), insbesondere aber Polyphenyl-polymethylen-polyisocyanate, wie sie durch Anilin-Formaldehyd-Kondensation und anschließende Phosgenierung hergestellt werden (»rohes MDI«), ferner Carbodiimidgruppen, Urethangruppen, Allophanatgruppen, Isocyanuratgruppen, Harnstoffgruppen oder Biuretgruppen aufweisenden Polyisocynate (»modifizierte Polyisocyanate«), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Mindestens zwei Hydroxylgruppen aufweisende phosphorhaltige Kondensationsprodukte, wie sie z. B. durch Kondensation von gegebenenfalls OH-Gruppen enthaltenden primären oder sekundären aliphatischen, cycloaliphatischen, aromatischen,araliphatischen oder heterocyclischen Mono- und/oder Polyaminen, Carbonylverbindungen und Dialkylphosphiten, gegebenenfalls unter anschließendem Oxalkylieren, erhalten werden können. Derartige Kondensationsprodukte sind an sich bekannt, z. B. aus der DE-C-1 143 022, US-A-3 076 010, DE-B-1 803 747 und DE-B-1 928 265.

Erfindungsgemäß bevorzugt sind als mindestens zwei Hydroxylgruppen aufweisende phosphorhaltige Kondensationsprodukte solche der Formel

$$(RO)_2PO-CH_2-N=(CHX-CHX-OH)_2,$$

in der

R = $C_1-C_8$-Alkyl oder $C_1-C_8$-Hydroxyalkyl, vorzugsweise Ethyl oder Hydroxyethyl, und
X = H oder Methyl, vorzugsweise H, bedeuten.

3. Hydroxylgruppen aufweisenden Polyestern der OH-Zahl 140 bis 300, erhalten durch Umsetzung von zwei bis zehn C-Atome aufweisenden aliphatischen, cycloaliphatischen, araliphatischen und aromatischen Polycarbonsäuren mit mindestens zwei Polyolen aus zwei verschiedenen der drei folgenden Gruppen

a) mehr als drei OH-Gruppen aufweisende Hydroxylverbindungen vom Molekulargewciht bis 200,
b) drei OH-Gruppen aufweisende Hydroxylverbindungen vom Molekulargewicht bis 150,
c) zwei OH-Gruppen aufweisende Hydroxylverbindungen vom Molekulargewicht bis 80,

wobei ein Polyol der Gruppe a) angehören soll.

Als Polycarbonsäuren kommen die an sich bekannten in Frage; neben den Benzoldicarbonsäuren sind aliphatische Polycarbonsäuren mit 3–10 C-Atomen bevorzugt.

Als Benzoldicarbonsäuren seien z. B. Phthalsäure und Terephthalsäure genannt; als aliphatische Polycarbonsäuren werden insbesondere solche mit drei bis acht C-Atomen wie Zitronensäure, Oxalsäure, Malein- und Fumarsäure, bernsteinsäure verwendet. Wegen der guten Zugänglichkeit ist Adipinsäure bevorzugt.

Von den Hydroxylverbindungen der Gruppe a) ist Pentaerythrit bevorzugt, es sind aber z. B. auch in Betracht zu ziehen Mannit, Sorbit, Xylit, Formit, d. h. Zuckerpolyole.

Von den Hydroxylverbindungen der Gruppe b) ist Glyzerin bevorzugt, in Betracht zu ziehen sind aber auch z. B. Trimethylolpropan oder Triethanolamin.
Von den Hydroxylverbindungen der Gruppe c) ist bevorzugt Ethylenglykol zu nennen.
Die Polyester besitzen bei 75° C Viskositäten um 1000 bis 8000 mPa · s, bevorzugt werden Viskositäten von 1200 bis 5000 mPa · s bei 75° C. Die Säurezahlen sollen unter 10 liegen, vorzugsweise zwischen 0 und 5. Die Molekulargewichte liegen um 500 bis 2000, vorzugsweise bei 600 bis 1500, die OH-Zahlen bei 140 bis 300, vorzugsweise 170—220.
Die Mitverwendung weiterer Polyester anderer Zusammensetzung ist grundsätzlich möglich, jedoch sollte ihr Anteil 20 Gew.-% der gesamten Polyestermenge nicht überschreiten.

4. Cyanursäure und/oder ihre Derivate d. h. Cyanursäure bzw. Verbindungen, die sich als Cyanursäure- bzw. Isocyansäureabkömmlinge verstehen lassen. Solche sind z. B. Cyanamid, Dicyanamid, Dicyandiamid, Guanidin und dessen Salze, Biguanid, Melamincyanurat, Cyanursäuresalze und Cyanursäureester und -amide, insbesonders Melamin, das wegen seiner guten Zugänglichkeit bevorzugt wird.
Als Melamin wird vorzugsweise der Grundkörper 2,4,6-Triamino-s-Triazin verstanden, es sind jedoch auch z. B. dessen durch thermische Behandlung oder Umsetzung mit Formaldehyd erhältlichen Kondensationsprodukte in Betracht zu ziehen.

5. Gegebenenfalls Wasser und/oder weitere organische Verbindungen mit gegenüber Isocyanaten reaktionsfähigen Wasserstoffatomen. Hierzu zählen:

a) Verbindungen mit mindestens zwei gegenüber Isocyanaten reaktionsfähigen Wasserstoffatomen von einem Molekulargewicht in der Regel von 400—10 000. Hierunter versteht man neben Aminogruppen, Thiolgruppen oder Carboxylgruppen aufweisendem Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 6000, vorzugsweise 1000 bis 3000, z. B. mindestens zwei, in der Regel 2 bis 8, vorzugsweise aber 2 bis 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind. Erfindungsgemäß sind Polyester bevorzugt.
Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.
Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellithsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäurenhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. $\varepsilon$-Caprolacton, oder aus Hydroxycarbonsäuren, z. B. $\omega$-Hydroxycapronsäure, sind einsetzbar.
Auch die erfindungsgemäß in Frage kommenden, mindestens zwei, in der Regel zwei bis acht, vorzugsweise zwei bis drei, Hydroxylgruppen aufweisenden Polyether sind solche der an sich bekannten Art und werden z. B. durch Polymerisation von Tetrahydrofuran oder Epoxiden wie Ethylenoxid, Propylenoxid, Butylenoxid, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, hergestellt. Auch Sucrosepolyether, wie sie z. B. in den DE-B-1 176 358 und 1 064 938 beschrieben werden, sowie auf Formit oder Formose gestartete Polyether (DE-A-2 639 083 bzw. 2 737 951), kommen erfindungsgemäß in Frage.

Vertreter der genannten Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z. B. auf den Seiten 45–71, beschrieben. Selbstverständlich können Mischungen der obengenannten Verbindungen mit mindestens zwei gegenüber Isocyanaten reaktionsfähigen Wasserstoffatomen mit einem Molekulargewicht von 400–10 000, z. B. Mischungen von Polyethern und Polyestern, eingesetzt werden.

b) Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.
Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.
Als Beispiele für derartige Verbindungen seien genannt:
Ethylenglykol, Proyplenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glycerin, Trimethylolpropan, Hexantriol-(1,2,6), Sorbit, Ricinusöl, Diethylenglykol, Triethylenglykol, Tetraethylenglykol, höhere Polyethylenglykole mit einem Molekulargewicht bis 400, Dibutylenglykol, höhere Polypropylenglykole mit einem Molekulargewicht bis 400, 4,4'-Dihydroxy-diphenylpropan, Di-hydroxymethyl-hydrochinon, Ethanolamin, Diethanolamin, N-Methyldiethanolamin, Triethanolamin und 3-Aminopropanol.
Als niedermolekulare Polyole kommen erfindungsgemäß auch die Gemische von Hydroxyaldehyden und Hydroxyketonen (»Formose«) bzw. die hieraus durch Reduktion erhaltenen mehrwertigen Alkohole (»Formit«) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-A-2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildern und/oder Phosphiten ein (DE-A-2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-A-2 638 759).
Erfindungsgemäß geeignete aliphatische Diamine sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan (»Isophorondiamin«), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-A-2 638 731) und cycloaliphatische Triamine gemäß DE-A-2 614 244. Auch Hydrazin und substituierte Hydrazine, z. B. Methylhydrazin, N,N'- Dimethylhydrazin und deren Homologe sowie Säuredihydrazide kommen erfindungsgemäß in Betracht. Als Beispiele für aromatische Diamine seien Bisanthranilsäureester gemäß den DE-A-2 040 644 und 2 160 590, 3,5- und 2,4-Diaminobenzoesäureester gemäß DE-A-2 025 900, die in den DE-A-1 803 635 (US-A-3 681 290 und 3 736 350), 2 040 650 und 2 160 589 beschriebenen estergruppenhaltigen Diamine, die Ethergruppen aufweisenden Diamine gemäß DE-A-1 770 525 und 1 809 172 (US-A-3 654 364 und 3 736 295), gegebenenfalls in 5-Stellung substituierte 2-Halogen-1,3-phenylendiamine (DE-A-2 001 772, 2 025 896 und 2 065 869), 3,3'-Dichlor-4,4'-diamino-diphenylmethan, Toluylendiamin, 4,4'-Diaminodiphenylmethan.

Es wurde gefunden, daß für die vorteilhaften Eigenschaften der neuen Intumeszenzmassen, insbesondere der Intumeszenzschäume, nicht die für die konventionelle Polyurethanchemie üblichen stöchiometrischen Verhältnisse charakteristisch sind. Vielmehr werden die Komponenten 2, 3, 4 und gegebenenfalls 5 ungeachtet der in Bezug auf die Isocyanatchemie zu fördernden Stöchiometrie zusammengestellt und die so erhältliche Mischung in einfachen Vorversuchen mit verschiedenen innerhalb eines erfindungsgemäß gegebenen Mengenspielraums liegenden Mengen des Polyisocyanats umgesetzt, um die gewünschte optimale Wirksamkeit empirisch zu ermitteln.

Die so gefundenen Richtmengen für die einzelnen Komponenten 2, 3, 4 und gegebenenfalls 5 in dem mit dem Polyisocyanat umzusetzenden Reaktionsgemisch ergänzen sich zu 100% und betragen:

– für die mindestens zwei Hydroxylgruppen aufweisenden phosphorhaltigen Kondensationsprodukte (2):
5 bis 50, vorzugsweise 15 bis 25 Gew.-%,
— für die hochverzweigten Polyester (3):
30 bis 70, vorzugsweise 60 bis 45%,
— für die Cyanursäurederivate (4):
7 bis 40, vorzugsweise 15 – 30 Gew.-%,
— für Wasser (5):
0 – 10, vorzugsweise 0 – 3 Gew.-%,
— für die weitere organische Verbindung mit gegenüber Isocyanaten aktiven H-Atomen:
0 bis 25, vorzugsweise 0 bis 15 Gew.-%.

100 Gew.-Teile dieses Reaktionsgemisches werden in der Regel mit 10 bis 35, vorzugsweise 15 bis 25 Gew.-Teilen des Polyisocyanats umgesetzt.

Die Herstellung der Intumeszenzmassen kann in einem Lösungsmittel, vorzugsweise jedoch lösungsmittelfrei, erfolgen. Von besonderem Interesse sind Schaumstoffe; diese können Raumgewichte von 40 bis 900 kg/m$^3$, bevorzugt zwischen 100 und 600 kg/m$^3$, aufweisen. Eine besonders ausgewogene Kombination zwischen aus Gründen der Isolierfähigkeit angestrebtem niedrigem Raumgewicht und für die Aufschäumwirkung bei Flammenzutritt in der Raumeinheit notwendiger Masse stellen erfindungsgemäß zugängliche Schaumstoffe mit Raumgewichten von 150 bis 500 kg/m$^3$ dar.

Man kann die verschiedenen Reaktionskomponenten einzeln zusammenführen; zweckmäßigerweise jedoch macht man eine Vormischung aus den mit den Polyisocyanaten (Komponente 1) reaktionsfähigen Komponenten 2, 3, 4 und gegebenenfalls 5 und erhält so gegebenenfalls nach kurzem Erwärmen eine flüssige Reaktionskomponente, in der alle notwendigen Bestandteile bis auf das Polyisocyanat enthalten sind. Auf diese Weise lassen sich die erfindungsgemäßen Intumeszenzmassen als Zweikomponentengemisch formulieren bzw. aus diesem herstellen. Hierzu sind die üblichen Einrichtungen der Polyurethantechnologie einsetzbar.

Es ist durchaus möglich, der Komponentenvormischung gegebenenfalls auch dem Isocyanat, noch weitere Rezepturbestandteile zuzusetzen, z. B. Harnstoff, Harnstoffkondensate, Formaldehydkondensate, Phenolharze, Phosphate, Aminpolyphosphate, Phosphorsäureester z. B. Trikresylphosphat oder Dibutylkresylphosphat, Al-Oxidhydrate, Glaspulver, Vermiculite, massive oder hohle Glas- oder sonstige Siliaktperlchen und sonstige das Brandverhalten modifizierende Zusatzstoffe.

Obgleich es überraschenderweise nicht notwendig ist, zur Herstellung der erfindungsgemäßen gegebenenfalls geschäumten Intumeszenzmassen Katalysatoren für die Schaumstoffbildung oder sonstige Hilfsmittel, wie sie sonst in der Schaumstoffchemie üblich sind, beispielsweise auch zusätzlich gasförmige oder niedrig siedende Treibmittel, bzw. Treibgaserzeuger mitzuverwenden, können solche zusätzliche Hilfsmittel, ebenso wie emulgierende, trennende, farbgebende, konservierende, Hydrolysenschutz vermittelnde, geruchsaktive oder sonstige Zusatzstoffe natürlich im Einzelfall als Rezepturkomponente in Betracht gezogen werden. Beispielsweise führt die Mitverwendung von zur Carbodiimidbildung Anlaß gebenden Katalysatoren, wie sie z. B. in der Klasse der Phospholinoxide wie etwa 1-Methyl-1-oxo-phospholin, bekannt sind, zu Intumeszenzmassen mit verbesserter Stabilität gegen Hydrolyse.

Weiterhin ist in Betracht zu ziehen, auch solche Zusatzstoffe rezepturmäßig in den erfindungsgemäßen Intumeszenzmassen miteinzusetzen, die die Schaumbildung im Falle der Beflammung zu steigern helfen können. Solche sind beispielsweise aliphatische und insbesondere aromatische Hydroxycarbonsäuren wie Salizilsäure oder p-Hydroxybenzoesäure, oder bei erhöhter Temperatur Wasser, Kohlehydrate, Stickstoff oder $CO_2$ abgebende Substanzen wie Triazole, Azodicarbonamide, Sulfohydrazide oder Harnstoff-dicarbonsäureanhydrid.

Man kann aus den erfindungsgemäßen Intumeszenzmassen, z. B. durch Verpressen oder Formgießen und Gelieren durch Schneiden oder Schmelzen, Formkörpern fabrizieren, die bei Temperaturen zwischen 200 und 350°C aufschäumen und so eine Flammenasubreitung verhindern, die also als Dichtelemente, Sicherungsvorrichtung, Brandsperren, geeignet sind. Man kann Verfugungen vornehmen, Kabeldurchbrüche verschließen, wobei z. B. auch eine Art Beton aus dem Intumeszenzmittel und Steinen und/oder geblähten Teilchen wie Blähton, Blähglas, Vermiculite, Perlit u. ä. und/oder auch Schaumstoffperlen auf z. B. Polystyrolbasis hergestellt und verwendet werden kann.

Ebenfalls ist von Interesse die Herstellung von gegebenenfalls armierten Beschichtungen nahezu beliebiger Dicke auf Metall, z. B. Stahlträgern und -blechen, Holz, z. B. Türblättern, Dachbalken, auf Mauerwerk, auf Kunststoffen, seien es Kabelisolierungen oder Schaumstoffplatten. Wenn man die Beschichtungen auf einer tragfähigen Platte oder Stützkonstruktion vornimmt, z. B. in bzw. auf einer Reckmetallplatte, einer Wabenplatte aus Metall, Pappe, Papier, Holz, Keramik oder Kunststoff, dann können so leicht feuerhemmende Platten oder Wandelemente hergestellt werden.

Die Intumeszenzmassen sind auch für die Herstellung von Antidröhnbelägen oder Schallschutzelementen von Interesse.

Auch die Innenbeschichtung von feuerhemmenden Türen, die im Brandfall aufschäumt und isolierend wirkt, ist in Betracht zu ziehen, desgleichen die Herstellung von Tür- oder sonstigen Dichtungen, die im Brandfall aufschäumen und den vorgelagerten Schlitz abdichten. Man kann auch Dichtprofile,

z. B. aus elastischem Material, mit den erfindungsgemäßen Intumeszenzmassen füllen oder hinterfüllen und so eine Brandschutzdichtung erzielen. Durch geeignete Anordnung kann man in Kaminen, Lüftungs- und Klimaanlagen, Rohrleitungen und Ein-/Austrittsöffnungen Sperren aufbauen, die im Fall einer Erhitzung auf ca. 200°C, bis 400°C den weiteren Durchtritt von Gasen bremsen oder verhindern. Solche Anordnungen sind z. B. Stapel von in geringen Abständen parallel liegenden Platten, mit den Intumeszenzmassen beschichtete Siebe und Lochblenden oder mit Granulaten der Intumeszenzmassen locker gefüllte Rohrabschnitte. Die gegegebenenfalls geschäumten Intumeszenzmassen können auch als Filterelemente für Gase eingesetzt werden, die sich bei zu großer Temperaturerhöhung verschließen.

Man kann auch z. B. Formkörper, die aus den Intumeszenzmassen leicht herstellbar sind, oder auch Granulate verschiedenster Körnung ein- oder mehrstufig verschäumen, indem man sie auf Temperaturen über 200°C erhitzt, vorzugsweise auf Temperaturen zwischen 250 bis 1800°C; insbesondere 250–800°C. Die Verschäumung kann frei oder in geschlossenen oder offenen Formen vorgenommen werden, wobei diese Formen zweckmäßigerweise Öffnungen zum Austritt von Dampf und Luft aufweisen sollten.

Hierbei entstehen feuerabweisende Schaumstoffe, sogenannte Carbonisierungsschäume.

Das Erhitzen kann durch Strahlungswärme, durch Behandeln mit Heißdampf oder Heißluft oder sonstigen heißen Gasen, durch Mikrowellen oder Hochfrequenz bzw. durch Wärmeleitung in Luft oder Flüssigkeitsbädern bzw. Metallbädern geschehen.

Man kann die erfindungsgemäßen Intumeszenzmassen auch auf Trägermaterialien aufbringen und dort verschäumen, z. B. indem man Blähtonteilchen beschichtet, dann in eine Form schüttet und dort erhitzt, wobei ein Block aus in Carbonisierungsschaum eingebettetem Blähton entsteht. Eine entsprechend beschichtete Holz- oder Eisenplatte kann bei ca. 250°C zu einer Schaumstoffkombinationsplatte verarbeitet werden, wobei die Schaumstoffoberfläche durch eine weitere Holz- oder Eisenplatte abgedeckt werden kann.

Zu erwähnen ist auch das Ausschäumen von Hohlräumen, z. B. in Kabelschächten, aber auch in Ziegelsteinen und sonstigen Baustoffen, was z. B. durch Einbringen der Reaktionsmischungen oder fertigen Schaumstoff-Intumeszenzmassen in geeigneter Menge in den Hohlraum des kalten oder noch warmen Steines gelingt.

Die erfindungsgemäßen Intumeszenzmassen sind auch in Form von Rohrhalbschalen oder von Vollmänteln zur Isolierung von Rohren oder Kabeln geeignet. Von Interesse ist, daß die Isolierung auch in situ vorgenommen werden kann, indem man das Rohr oder das zu isolierende Stück mit dem Reaktionsgemisch beschichtet und zum Aufschäumen bringt.

Die Herstellung und Verarbeitung der zu den Intumeszenzmassen führenden Reaktionsgemische kann kontinuierlich oder diskontinuierlich erfolgen. Man kann die Komponenten einzeln oder als Gemische zusammenführen. Vorzugsweise werden alle Reaktionskomponenten bis auf das Isocyanat zusammengefaßt, so daß eine 2-Komponentenverarbeitung erfolgen kann, z. B. in normalen Handrührgefäßen mit mechanischen Rührern, in Rührwerks- oder Düsenmischköpfen oder in Statikmischern, wie sie auch aus der Polyurethanchemie bekannt sind. Die Ausreaktion kann in gekühlten, kalten oder beheizten Formen drucklos oder unter Druck erfolgen.

Die folgenden Versuchsbeschreibungen sollen den Erfindungsgegenstand beispielhaft erläutern, nicht aber einschränken. Die angegebenen Teile sind Gewichtsteile und/oder Gewichtsprozente, falls nicht anders vermerkt ist.

Die folgenden Versuchsreihen sollen den Zusammenhang zwischen Rezeptur und Eigenschaften der erfindungsgemäß zugänglichen Intumeszenzmassen erläutern.

Hierzu wurde verwendet:

Als Polyisocyanat (1) ein durch Phosgenierung von Anilin-Formaldehyd-Kondensaten erhaltenes, handelsübliches technisches Polyisocyanatisomerengemisch mit einem Gehalt von ca. 90% Zweikerndiisocyanaten und ca. 10% Mehrkernpolyisocyanaten,
als hochverzweigter Polyester (3) ein Polyester aus ca. 6 Mol Adipinsäure, ca. 1 Mol Pentaerythrit, ca. 0,25 Mol Glyzerin und ca. 5,25 Mol Ethylenglykol mit einer OH-Zahl von 199,6; einer Säurezahl von 4, 2; einer Viskosität bei 75°C von 4470 mPa · s 4,25,
als phosphorhaltiges Kondensationsprodukt (2) wird $(C_2H_5O)_2PO \cdot CH_2N(C_2H_4OH)_2$ in technischer Qualität, verwendet, hier bezeichnet als p-Diol (2).

Variation des Zusatzes an Cyanursäurederivat Melamin:

| | Beispiel 1 | 2 | 3 | 4 | 5 | 6 |
|---|---|---|---|---|---|---|
| Mischung aus | | | | | | |
| Melamin (4) Tle. | 27 | 23 | 17 | 10 | 5 | 0,5 |
| Wasser (5) Tle. | 0,5 | 0,5 | 0,5 | 0,5 | 0,5 | 0,5 |
| Polyester (3) Tle. | 43 | 43 | 43 | 43 | 43 | 43 |
| P-Diol (2) Tle. | 14 | 14 | 14 | 14 | 14 | 14 |

Diese Mischung wird bei Raumtemperatur mit 15 Teilen Polyisocyanat (1) verrührt. Das so erhaltene Reaktionsgemisch beginnt etwa 50 Sekunden nach Beginn der Vermischung aufzuschäumen. Nach ca. 5 Minuten ist die Reaktion beendet. Nach Beispiel 2 entsteht ein Schaumstoff mit einem Raumgewicht von ca. 250 kg/$m^3$.

Alle Schaumstoffe sind flexible weiche Schaumstoffe, deren Weichheit von 1 nach 6 hin zunimmt. Alle zeigen den Effekt, sich nach dem Zusammendrücken nur langsam zu erholen, so daß sie z. B. in Form von geschnittenen Bändern leicht in zusammengedrücktem Zustand in Fugen eingebracht werden und sich dann dort ausdehnen können. Das Zusammendrücken geschieht per Hand oder durch Durchführen zwischen zwei Quetschrollen.

Drückt man einen Zylinder von 3 cm Durchmesser und 10 cm Höhe bei 20°C 5 Sekunden auf 5 cm zusammen, dann benötigt Probe 1 ca. 10 Sekunden und Probe 6 ca. 45 Sekunden, um das ursprüngliche Volumen wieder zu erreichen.

Zur Prüfung auf Verhalten bei Beflammung wird ein Musterwürfel von 1,5 cm Kantenlänge auf einem Metallrost seitlich einer Bunsenbrennerflamme ausgesetzt.

In allen Fällen verbrennt der Schaumstoff nicht, sondern verkohlt. In den Fällen 1 bis 3 verlischt die Flamme sofort, wenn man den Bunsenbrenner während der Beflammung kurzfristig entfernt, in den Fällen 5 und 6 erfolgt ein Nachbrennen länger als 5 Sekunden, im Falle 4 erfolgt ein kurzes Nachbrennen unter 5 Sekunden. In den Fällen 1 bis 3 schäumt die beflammte Probe zu einem Vielfachen ihres ursprünglichen Volumens auf, im Fall 4 wird ein geringes Aufschäumen beobachtet, in den Fällen 5 und 6 erfolgt ein Wegschrumpfen des Schaumstoffes während der Beflammung. Die Proben 1 bis 4 sind als Intumeszenzmassen geeignet, vorzugsweise die Proben 1 bis 3.

Verdoppelt man in den Beispielen 1 bis 6 die eingesetzte Wassermenge, so haben bei prinzipiell gleichem Brandverhalten die entstehenden geschäumten Intumeszenzmassen um ca. 25% verringerte Raumgewichte und sind noch weicher. Die Relaxationszeiten im oben geschilderten Eindrückversuch nehmen um ca. 50 bis 100% zu.

Variation der Menge an Polyester (3) und P-Diol (2):

| | Beispiel 7 | 8 | 9 | 10 | 11 | 12 |
|---|---|---|---|---|---|---|
| Mischung aus | | | | | | |
| Melamin (4) Tle. | 23 | 23 | 23 | 23 | 23 | 23 |
| Wasser (5) Tle. | 0,5 | 0,5 | 0,5 | 0,5 | 0,5 | 0,5 |
| Polyester (3) Tle. | 50 | 45 | 43 | 40 | 30 | 20 |
| P-Diol (2) Tle. | 7 | 12 | 14 | 17 | 27 | 37 |

Diese Mischung wird in einer Mischkammer mit 15 Tln. Polyisocyanat (1) gut verrührt. Nach ca. 5 Minuten ist die Verschäumungsreaktion unter mäßiger Erwärmung beendet. Nach Beispiel 9 wird ein Schaumstoff mit einem Raumgewicht von ca. 280 kg/$m^3$ erhalten. Die Proben 7 bis 10 stellen Schaumstoffe dar, die Probe 11 kann als zäh-elastische poröse Masse mit plastelinartiger Konsistenz angesprochen werden, die Probe 12 stellt einen klebenden zähen porigen Kitt dar. Der für die Beispielreihe 1 bis 6 geschilderte Relaxationstest führt zu folgenden Relaxationszeiten:

| | |
|---|---|
| Beispiel 7 | unter 3 Sekunden |
| Beispiel 8 | ca. 5 Sekunden |
| Beispiel 9 | ca. 10 Sekunden |
| Beispiel 10 | ca. 35 Sekunden |

Im Beflammungstest gemäß Beschreibung für Beispiel 1 bis 6 zeigt sich, daß alle Proben nicht verbrennen, sondern verkohlen. Bei kurzer Entfernung des Brenners brennt Probe 7 unter 5 Sek. nach, bei den anderen Proben wird kein Nachbrennen beobachtet. Sämtliche Proben schäumen auf mehr als das Doppelte ihres ursprünglichen Volumens auf. Die Tendenz zum Aufschäumen verstärkt sich zunehmend von Probe 7 nach Probe 12.

Prinzipiell sind alle Proben als Intumeszenzmassen brauchbar. Die nach 7 bis 10 erhältlichen Schaumstoffe, insbesonderes das nach Beispiel 9 zugängliche Material, eignen sich z. B. in Form von vorgeformten Pfropfen, Bändern oder Profilen zum Ausfüllen und Abdichten von Fugen bzw. bei Herstellung vor Ort zum Einbringen in gegen Durchtritt von Feuer zu schützende Hohlräume, die dann ausgeschäumt werden. Die Proben 11 und 12 können prinzipiell als elastische Kittmasssen mit Intumeszenzwirkung eingesetzt werden, sofern die starke Klebwirkung der Probe 12 toleriert werden kann.

Variation der Polyisocyanatmenge (1):

| | Beispiel 13 | 14 | 15 | 16 | 17 | 18 | 19 | 20 | 21 | 22 | 23 |
|---|---|---|---|---|---|---|---|---|---|---|---|
| Mischung aus | | | | | | | | | | | |
| Melamin (4) Tle. | 23 | 23 | 23 | 23 | 23 | 23 | 23 | 23 | 23 | 23 | 23 |
| Wasser (5) Tle. | 0,5 | 0,5 | 0,5 | 0,5 | 0,5 | 0,5 | 0,5 | 0,5 | 0,5 | 0,5 | 0,5 |
| Polyester (3) Tle. | 43 | 43 | 43 | 43 | 43 | 43 | 37 | 37 | 37 | 37 | 37 |
| P-Diol (2) Tle. | 14 | 14 | 14 | 14 | 14 | 14 | 20 | 20 | 20 | 20 | 20 |
| Polyisocyanat (1) Tle. | 7 | 13 | 16 | 20 | 27 | 35 | 7 | 13 | 20 | 27 | 35 |

Die erhaltenen Produkte sind wie folgt zu beschreiben: Probe 19 entspricht in Konsistenz und Verhalten bei Beflammung etwa Probe 12. Die Proben 13 und 20 entsprechen in Konsistenz und Brandverhalten etwa der Probe 11.

Die Proben 14, 15, 16, 21 und 22 stellen flexible Weichschäume mit Raumgewichten zwischen 220 und 350 kg/m$^3$ dar. Sie haben gemäß Beispiel 1 – 6 Relaxationszeiten zwischen 5 und 45 Sekunden. Bei Beflammung gemäß Beispiel 1 – 6 werden Nachbrennzeiten unter 3 Sekunden beobachtet, es erfolgt eine Volumenausdehnung über mehr als 100% unter Ausbildung eines feuerabweisenden Carbonisierungschaumes. Im Gegensatz zu den gegebenenfalls nur als Kitte zu verwendenden Materialien 19, 13 und 20 sind die Proben 14, 15, 16, 21 und 22 zu flexiblen Formkörpern mit guten Intumeszenzeigenschaften zu verarbeiten, z. B. zu Profilen, etwa durch Zuschneiden der in Blöcken hergestellten geschäumten Intumeszenzmassen.

Die Proben 17 und 23 stellen zähe, wenig eindrückbare Schäume dar, die gegebenenfalls zur Energieabsorption geeignet sind. Im Beflammungstest wird ein Nachbrennen unter 10 Sekunden beobachtet. Eine Volumenvergrößerung findet nur noch in geringem Umfange statt. Die Probe 18 hat kaum Intumeszenzeigenschaften, d. h. bei Beflammung wird kein Schäumen beobachtet, sowie ein Nachbrennen um 10 Sekunden und länger. Dieser Typ ist als Intumeszenzmasse wenig geeignet.

Variation des Verhältnisses von Cyanursäurederivat (4) und Polyisocyanat (1):

| | Beispiel 24 | 25 | 26 | 27 | 28 |
|---|---|---|---|---|---|
| Mischung aus | | | | | |
| Melamin (4) Tle. | 21 | 22 | 23 | 24 | 25 |
| Wasser (5) Tle. | 0,5 | 0,5 | 0,5 | 0,5 | 0,5 |
| Polyester (3) Tle. | 45 | 45 | 45 | 45 | 45 |
| P-Diol (2) Tle. | 15 | 15 | 15 | 15 | 15 |
| abgemischt mit Polyisocyanat (1) Tle. | 18,5 | 17,5 | 16,5 | 15,5 | 14,5 |

In allen Fällen werden nach ca. 5 min ausgehärtete weiche, geschäumte intumeszenzfähige Formkörper erhalten, wenn man die frisch hergestellte Reaktionsgemische in eine Becherform eingießt und dort aufschäumen läßt.

Die Raumgewichte variieren von Probe 24 bis 28 von ca. 230 bis 300 kg/m$^3$, die oben beschrieben bestimmten Relaxationszeiten von ca. 10 Sekunden bis zu ca. 40 Sekunden. Beim Beflammungstest wird kein Nachbrennen beobachtet, bei allen Proben erfolgt eine Volumenvergrößerung um mehr als 100%. Obgleich prinzipiell alle Proben 24–28 als Intumeszenzmassen mit Schaumstoffcharakter brauchbar sind, wird in Bezug auf Ausgewogenheit von Flexibilität, Raumgewicht und Brandverhalten die Probe gemäß Beispiel 27 als am besten geeignet bezeichnet.

Gemäß Beispiel 27 wird ein Reaktionsgemisch hergestellt und auf ein laufendes Band als ca. 1,3 cm Durchmesser aufweisender Strang durch eine Düse aufgetragen. Das Material schäumt auf dem Band zu einem quasi endlosen Profil aus geschäumter Intumeszenzmasse mit halbkreisförmigem Querschnitt auf und kann dann aufgewickelt und als Fugendichtungsschnur mit Intumeszenzeigenschaften verwendet werden.

Beispiel 29

Es wird verfahren wie in Beispiel 26, jedoch an Stelle von Melamin wird fein gepulvertes Dicyandiamid verwendet. Man erhält analog Beispiel 26 einen weichen Intumeszenzschaum mit analogen mechanischen Eigenschaften. Dieser zeichnet sich im Beflammungsversuch gegenüber Probe 26 dadurch aus, daß die Volumenvergrößerung deutlich intensiver vonstatten geht. Die gleiche Beobachtung wird auch gemacht, wenn man analog Beispiel 26 anstelle von Melamin ein Gemisch gleicher Teil Melamin und Dicandiamid verwendet.

Beispiel 30

Es wird verfahren wie bei Beispiel 27, anstelle des dort verwendeten Polyisocyanats (1) wird jedoch ein analog erhaltenes technisches Polyisocyanat (1) mit einem Mehrkernanteil nicht von ca. 10%, sondern von ca. 40% eingesetzt. Man erhält eine geschäumte, weiche Intumeszenzmasse, die sich von der Probe 27 lediglich um eine um ca. 20% verkürzte Relaxationszeit bei einem Raumgewicht von ca. 280 kg/m$^3$ unterscheidet. Im Beflammungstest wird kein Nachbrennen und eine mehr als 100%ige Volumenvergrößerung beobachtet.

Beispiel 31

Es wird verfahren wie bei Beispiel 27. Anstelle des dort verwendeten Polyesters (3) wird jedoch ein Polyester aus 6 Mol Adipinsäure, 6 Mol Ethylenglykol und 1 Mol Pentaerythrit mit einer OH-Zahl von 197,2; einer Säurezahl von 2,3 und einer Viskosität bei 75° C von 1997 mPa · s eingesetzt.

Man erhält eine flexible geschäumte Intumeszenzmasse, die sich in ihren Eigenschaften völlig analog Beispiel 27 verhält. Verwendet man analog einen Polyester aus 5 Mol Adipinsäure, 1 Mol Terephthalsäure, 6 Mol Ethylenglykol und 1 Mol Pentaerythrit, so wird ein Intumeszenzschaum erhalten, der sich bei gleichartigem Intumeszenzverhalten gegenüber dem nach Beispiel 27 erhaltenen Material durch eine um ca. 20% erniedrigte Relaxationszeit auszeichnet.

### Beispiel 32

In eine ca. 1 cm starke Tonplatte wird ein Schlitz von ca. 10 cm Länge und 1 cm Breite eingefräst. Dann legt man die Platte plan auf eine Polyethylenfolie und gießt den Schlitz mit dem Reaktionsgemisch nach Beispiel 27 aus. Nach dem Aufschäumen wird das aus dem Schlitz herausgetretene Material über der Plattenoberfläche so abgeschnitten, daß eine ca. 2 mm breite Überlappung der Intumeszenzmasse über die Plattenoberfläche erhalten bleibt, d. h. daß der in den Schlitz eingebrachte Schaumstoff etwa T-formiges Profil besitzt, sowie eine Materialdicke von ca. 1,3 cm aufweist. Nun wird die so ausgerüstete Platte so über einem Bunsenbrenner angebracht, daß die Unterseite der Platte, d. h. die den Schlitz füllende Intumeszenzmasse etwa in der Mitte zwischen dem äußeren Rand der entleuchteten Erdgasflamme und dem inneren blauen Flammenkegel angeordnet ist. In dieser Stellung wird die Beflammung durchgeführt, ohne daß nach 90 Minuten die Füllung des Schlitzes von der Flamme durchgebrannt worden ist.

### Beispiel 33

Ein gemäß der Rezeptur nach Beispiel 27 hergestellter Intumeszenzschaum wird in Würfel von 1,5 cm Kantenlänge geschnitten. Ein Teil dieser Würfel wird in 1 l Wasser eingelegt und mittels eines Netzes unter der Wasseroberfläche 8 Tage aufbewahrt. Anschließend wird getrocknet und der Beflammungstest gemäß Beispiel 1 – 6 durchgeführt. Gegenüber dem nicht in Wasser gelagerten Referenzmaterial wird bei Beflammung festgestellt: Die Intumeszenzeigenschaften sind erhalten geblieben, das Aufschäumverhalten hat sich nur geringfügig verschlechtert.

### Beispiel 34

Die gemäß Beispiel 28 erhaltene Fugendichtungsschnur wird in eine in einem Gasbetonstein befindliche Fuge mit 1,5 cm Fugenbreite eingedrückt, so daß gerade kein Material die Steinoberfläche überragt. Dann wird die senkrecht stehende Fuge mittig von einem annähernd waagerecht angeordneten Bunsenbrenner analog Beispiel 32 beflammt. Hierbei tritt ein kräftiges Aufschlämmen des Intumeszenzmaterials in der Fuge auf. Nach 60 Minuten ist noch kein Flammendurchschlag eingetreten.

### Beispiel 35

Das gemäß Beispiel 27 hergestellte Reaktionsgemisch wird in mit Wachs imprägnierte konische Becherformen eingebracht und dort aufgeschäumt. Nach ca. 10 Minuten entnimmt man den Formen die konischen Formkörper. Diese dienen zum gegen Branddurchtritt schützenden Verschließen von mehr oder weniger runden Löchern in Leichtbauwänden oder von Rohrenden, indem man sie zunächst komprimiert, in diesem Zustand in die Löcher einbringt und dort sich wiederum ausdehnen läßt. Es wird ein rauchgasdichter Verschluß solcher Öffnungen erreicht.

### Beispiel 36

Man stellt ein Reaktionsgemisch analog Beispiel 28 her, jedoch ohne Mitverwendung von Wasser. Die Reaktion ist nach ca. 5 Minuten beendet. Man erhält ein zähes gummiartiges Material mit ausgezeichneten Intumeszenzeigenschaften im Beflammungstest, ohne daß ein Nachbrennen beobachtet wird.

Analog läßt sich auch eine Reaktionsmischung analog Beispiel 29 ohne Wasserzusatz zu einem massiven flexiblen gummiartigen Intumeszenzmaterial aushärten. Dieses zeichnet sich gegenüber der vorgenannten melaminhaltigen Mischung durch eine deutlich intensivere Schaumbildung bei Beflammung aus.

Bring man eine solche Reaktionsmischung vor dem Erhärten auf eine Stahlblechoberfläche, so erhärtet sie dort zu einem gummiartigen Überzug mit guter Haftung und Intumeszenzwirkung, so daß das rückwärtige Stahlteil einen Schutz gegen Flammenzutritt erhält.

Die gummiartigen Intumeszenzmassen können auch als Material zur Herstellung von elektr. Kabel-Schutzmänteln oder Schläuchen dienen. In Elektrokabel eingebracht, stellen sie einen flexiblen Schutz gegen Flammendurchtritt dar.

## Patentansprüche

1. Gegebenenfalls geschäumte Intumeszenzmassen, erhalten durch Umsetzung von

1. Polyisocyanaten mit
2. mindestens zwei Hydroxylgruppen aufweisenden phosphorhaltigen Kondensationsprodukten, erhältlich durch Kondensation von gegebenenfalls OH-Gruppen enthaltenden primären oder sekundären aliphatischen, cycloaliphatischen, aromatischen, araliphatischen oder heterocyclischen Mono- und/oder Polyaminen, Carbonylverbindungen und Dialkylphosphiten, gegebenenfalls unter anschließendem Oxalkylieren, und
3. Hydroxylgruppen aufweisenden Polyestern der OH-Zahl 140 bis 300, erhalten durch Umsetzung von zwei bis zehn C-Atome aufweisenden Polycarbonsäuren mit mindestens zwei Polyolen aus zwei verschiedenen der drei folgenden Gruppen
   a) mehr als drei OH-Gruppen aufweisende Hydroxylverbindungen vom Molekulargewicht bis 200,
   b) drei OH-Gruppen aufweisende Hydroxylverbindungen vom Molekulargewicht bis 150,
   c) zwei OH-Gruppen aufweisende Hydroxylverbindungen vom Molekulargewicht bis 80,
   wobei ein Polyol der Gruppe a) angehören soll und
4. Cyanursäure und/oder Cyanursäurederivaten und
5. gegebenenfalls Wasser und/oder weiteren organischen Verbindungen mit gegenüber Isocyanaten reaktionsfähigen Wasserstoffatomen.

2. Intumeszenzmassen gemäß Anspruch 1, erhalten durch Umsetzung von 10 bis 35 Gew.-Teilen eines Polyisocyanates mit 100 Gew.-Teilen eines Gemisches, bestehend aus 5 bis 50 Gew.-% an mindestens zwei Hydroxylgruppen aufweisenden phosphorhaltigen Kondensationsprodukten und 30 bis 70 Gew.-% an Polyestern und 7 bis 40 Gew.-% am Cyanursäure(derivaten) und 0—10 Gew.-% Wasser und/oder 0 bis 25 Gew.-% an weiteren organischen Verbindungen mit gegenüber Isocyanaten reaktionsfähigen Wasserstoffatomen.

3. Intumeszenzmassen gemäß Anspruch 1 und 2, dadurch gekennzeichnet, daß als Polyisocyanate solche verwendet werden, wie sie durch Anilin-Formaldehyd-Kondensation und anschließende Phosgenierung erhalten werden.

4. Intumeszenzmassen gemäß Anspruch 1 bis 3, dadurch gekennzeichnet, daß als mindestens zwei Hydroxylgruppen aufweisende Kondensationsprodukte solche der Formel

$$(RO)_2PO-CH_2-N=(CHX-CHX-OH)_2,$$

in der

R = $C_1-C_8$-Alkyl oder $C_1-C_8$-Hydroxyalkyl und
X = H oder Methyl bedeuten,

verwendet werden.

5. Intumeszenzmassen nach Anspruch 1 bis 4, dadurch gekennzeichnet, daß man als Polyester hochverzweigte Polyester aus Adipinsäure, Pentaerythrit, Glyzerin und Ethylenglykol verwendet.

6. Intumeszenzmassen nach Anspruch 1 bis 5, dadurch gekennzeichnet, daß man als Cyanursäurederivat Melamin verwendet.

7. Verwendung der Intumeszenzmassen gemäß Anspruch 1 bis 6 als Hohlraumfüllungen, Fugenabdichtungen und Beschichtungen mit Intumeszenzeigenschaften.

8. Verwendung der Intumeszenzmassen gemäß Anspruch 1 bis 6, erhalten durch Reaktion in Formen oder durch nachträgliche Verformung der ausreagierten Reaktionsgemische, zur Herstellung von Formkörpern mit Intumeszenzeigenschaften.

## Claims

1. Optionally foamed intumescent compositions obtained by reacting

1. polyisocyanates with
2. phosphorus-containing condensation products containing at least two hydroxyl groups obtainable by the condensation of optionally OH-group-containing primary or secondary aliphatic, cycloaliphatic, aromatic, araliphatic or heterocyclic mono- and/or polyamines, carbonyl compounds and dialkyl phosphites, optionally followed by alkoxylation, and
3. hydroxyl-group-containing polyesters having OH-numbers of from 140 to 300 obtained by reacting polycarboxylic acids containing from two to ten C-atoms with at least two polyols from two of the

following three different groups
   a) hydroxyl compounds containing more than three OH-groups and having a molecular weight of up to 200,
   b) hydroxyl compounds containing three OH-groups and having a molecular weight of up to 150,
   c) hydroxyl compounds containing two OH-groups and having a molecular weight of up to 80,

one polyol having to belong to group a) and
4. cyanuric acid and/or cyanuric acid derivates and
5. optionally water and/or other organic compounds containing isocyanate-reactive hydrogen atoms.

2. Intumescent compositions as claimed in Claim 1 obtained by reacting from 10 to 35 parts by weight of a polyisocyanate with 100 parts by weight of a mixture consisting of from 5 to 50% by weight of phosphoruscontaining condensation products containing at least two hydroxyl groups and from 30 to 70% by weight of polyesters and from 7 to 40% by weight of cyanuric acid (derivatives) and from 0 to 10% by weight of water and/or from 0 to 25% by weight of other organic compounds containing isocyanatereactive hydrogen atoms.

3. Intumescent compositions as claimed in Claims 1 and 2, characterized in that the polyisocyanates used are of the type obtained by phosphenating aniline-formaldehyde condensates.

4. Intumescent compositions as claimed in Claims 1 to 3, characterized in that the condensation products containing at least two hydroxyl groups used correspond to the following formula

$$(RO)_2PO-CH_2-N=(CHX-CHX-OH)_2,$$

in which

R = $C_1-C_8$ alkyl or $C_1-C_8$ hydroxyalkyl and
X = H or methyl.

5. Intumescent compositions as claimed in Claims 1 to 4, characterized in that the polyesters used are highly branched polyesters of adipic acid, pentaerythritol, glycerol and ethylene glycol.

6. Intumescent compositions as claimed in Claims 1 to 5, characterized in that melamine is used as the cyanuric acid derivative.

7. The use of the intumescent compositions claimed in Claims 1 to 6 as cavity fillings, gap sealing materials and coatings having intumescent properties.

8. The use of the intumescent compositons claimed in Claims 1 to 6 obtained by reaction in molds or by subsequent forming of the fully reacted reaction mixtures for the production of moldings having intumescent properties.

**Revendications**

1. Masses intumescentes éventuellement gonflées en mousse, obtenues par réaction de

1. des polyisocyanates avec
2. des produits de concensation phosphorés portant au moins deux groupes hydroxy et qu'on peut obtenir par condensation de monoet/ou polyamines primaires ou secondaires aliphatiques, cycloaliphatiques, aromatiques, araliphatiques ou hétérocycliques contenant éventuellement des groupes OH, de composés carbonylés et de phosphites de dialkyle, éventuellement avec oxyalkylation subséquente, et
3. des polyesters portant des groupes hydroxy, d'indice d'OH 140 à 300, obtenus par réaction d'acides polycarboxyliques contenant 2 à 10 atomes de carbone avec au moins deux polyols de deux groupes différents des trois groupes suivants:
   a) des composés hydroxylés contenant plus de 3 groupes OH, de poids moléculaire allant jusqu'à 200,
   b) des composés hydroxylés portant 3 groupes OH, de poids moléculaire allant jusqu'à 150,
   c) des composés hydroxylés contenant 2 groupes OH, de poids moléculaire allant jusqu'à 80,

   un polyol devant appartenir au groupe a) et
4. de l'acide cyanurique et/ou des dérivés de l'acide cyanurique at
5. le cas échéant de l'eau et/ou d'autres composés organiques contenant des atomes d'hydrogène réactif à l'égard des isocyanates.

2. Masses intumescentes selon la revendication 1, obtenues par réaction de 10 à 35 parties en poids d'un polyisocyanate avec 100 parties en poids d'un mélange consistant en 5 à 50% en poids de produits de condensation phosphorés portant au moins 2 groupes hydroxy et 30 à 70% en poids de polyesters et 7 à 40% en poids d'acide cyanurique (dérivés) et 0 à 10% en poids d'eau et/ou 0 à 25% en poids

d'autres composés organiques contenant des atomes d'hydrogène réactif à l'égard des isocyanates.

3. Masses intumescentes selon les revendications 1 et 2, caractérisées en ce que l'on utilise en tant que polyisocyanates des polyisocyanates obtenus par condensation aniline-formaldéhyde et phosphogénation subséquente.

4. Masses intumescentes selon les revendications 1 à 3, caractérisées en ce que l'on utilise en tant que produits de condensation portant au moins deux groupes hydroxy des produits de formule

$$(RO)_2PO-CH_2-N=(CHX-CHX-OH)_2,$$

dans laquelle

R = alkyle en $C_1-C_8$ ou hydroxyalkyle en $C_1-C_8$ et
X = H ou méthyle.

5. Masses intumescentes selon les revendications 1 à 4, caractérisées en ce que l'on utilise en tant que polyesters des polyesters fortement ramifiés de l'acide adipique, du pentaérythritol, du glycérol et de l'éthylèneglycol.

6. Masses intumescentes selon les revendications 1 à 5, caractérisées en ce que l'on utilise en tant que dérivés de l'acide cyanurique la mélamine.

7. Utilisation des masses intumescentes selon les revendications 1 à 6, pour le bourrage d'espaces creux, l'étanchéité de joints et des revêtements à propriétés intumescentes.

8. Utilisation des masses intumescentes selon les revendications 1 à 6, obtenues par réaction dans des moules ou par façonnage subséquent des mélanges de réaction entièrement convertis, pour la préparation d'objets moulés à propriétés intumescentes.